# EUROPÄISCHE PATENTSCHRIFT

(11) **EP 1 206 667 B1**
(45) Veröffentlichungstag und Bekanntmachung des Hinweises auf die Patenterteilung: **25.02.2004**
(21) Anmeldenummer: 00958241.2
(22) Anmeldetag: 10.08.2000
(51) Int. Cl.: F25B 9/14, H02K 9/20, H02K 55/00

(54) **SUPRALEITUNGSEINRICHTUNG MIT EINER KÄLTEEINHEIT FÜR EINE ROTIERENDE, SUPRALEITENDE WICKLUNG**
SUPRACONDUCTING DEVICE COMPRISING A COOLING UNIT FOR A ROTATING SUPRACONDUCTIVE COIL
DISPOSITIF SUPRACONDUCTEUR COMPORTANT UNE UNITE REFRIGERANTE POUR UN ENROULEMENT SUPRACONDUCTEUR ROTATIF

(30) Priorität: 17.08.1999 DE 19938986
(43) Veröffentlichungstag der Anmeldung: 22.05.2002
(73) Patentinhaber: SIEMENS AKTIENGESELLSCHAFT, 80333 München (DE)
(72) Erfinder: STEINMEYER, Florian, Leafield, Oxfordshire OX8 5NP (GB)
(86) Internationale Anmeldenummer: PCT/DE2000/002685
(87) Internationale Veröffentlichungsnummer: WO 2001/013049

(56) Entgegenhaltungen:
- WO-A1-00/13296
- US-A- 4 048 529
- US-A- 4 079 273
- US-A- 5 335 505
- US-A- 5 482 919

## Beschreibung

Die Erfindung bezieht sich auf eine Supraleitungseinrichtung mit einem um eine Rotationsachse drehbar gelagerten Rotor, der eine Wicklung aus Supraleitermaterial aufweisenden Leitern enthält, und mit einer für ein Arbeitsgas ausgelegten Kälteeinheit, die mindestens einen in dem Rotor angeordneten, thermisch an die Wicklung zu deren indirekter Kühlung gekoppelten Kaltkopf, eine außerhalb des Rotors befindliche, ortsfeste Kompressoreinheit sowie eine zwischen dem Kaltkopf und der Kompressoreinheit angeordnete Transfereinheit mit Dichtungsmitteln zur Überleitung des Arbeitsgases zwischen ortsfesten und rotierenden Teilen umfaßt. Eine entsprechende Einrichtung geht aus der US 5,482,919 A hervor.

Neben den seit langem bekannten metallischen Supraleitermaterialien wie z.B. NbTi oder Nb₃Sn, die sehr niedrige Sprungtemperaturen T_{c} besitzen und deshalb auch Niedrig(Low)-T_{c}-Supraleitermaterialien oder LTS-Materialien genannt werden, kennt man seit 1987 metalloxidische Supraleitermaterialien mit Sprungtemperaturen von über 77 K. Letztere Materialien werden auch als Hoch-T_{c}-Supraleitermaterialien oder HTS-Materialien bezeichnet und ermöglichen prinzipiell eine Kühltechnik mit flüssigem Stickstoff (LN₂).

Mit Leitern unter Verwendung solcher HTS-Materialien versucht man, auch supraleitende Wicklungen zu erstellen. Es zeigt sich jedoch, daß bisher bekannte Leiter nur eine verhältnismäßig geringe Stromtragfähigkeit in Magnetfeldern mit Induktionen im Tesla-Bereich besitzen. Dies macht es vielfach erforderlich, daß die Leiter solcher Wicklungen trotz der an sich hohen Sprungtemperaturen der verwendeten Materialien dennoch auf einem unterhalb von 77 K liegenden Temperaturniveau, beispielsweise zwischen 10 und 50 K gehalten werden müssen, um so bei Feldstärken von einigen Tesla nennenswerte Ströme tragen zu können. Ein solches Temperaturniveau liegt zwar einerseits deutlich höher als 4,2 K, der Siedetemperatur des flüssigen Heliums (LHe), mit dem bekannte metallische Supraleitermaterialien wie Nb₃Sn gekühlt werden. Andererseits ist aber eine Kühlung mit LN₂ wegen der hohen Leiterverluste unwirtschaftlich. Andere verflüssigte Gase wie Wasserstoff mit einer Siedetemperatur von 20,4 K oder Neon mit einer Siedetemperatur von 27,1 K scheiden wegen ihrer Gefährlichkeit oder wegen mangelnder Verfügbarkeit aus.

Es kommen deshalb zur Kühlung von Wicklungen mit HTS-Leitern, in dem genannten Temperaturbereich bevorzugt Kälteeinheiten in Form von Kryokühlern mit geschlossenem He-Druckgaskreislauf zum Einsatz, beispielsweise vom Typ Gifford-McMahon, Stirling oder als sogenannte Pulsröhrenkühler. Solche Kälteeinheiten haben zudem den Vorteil; daß die Kälteleistung quasi auf Knopfdruck zur Verfügung steht und dem Anwender die Handhabung von tiefkalten Flüssigkeiten erspart wird. Bei einer Verwendung solcher Kälteeinheiten wird eine supraleitende Einrichtung wie z.B. eine Magnetspule oder eine Transformatorwicklung nur durch Wärmeleitung zu einem Kaltkopf eines Refrigerators indirekt gekühlt (vgl. z.B. Proc. 16^{th} Int. Cryog. Engng. Conf (ICEC 16)", Kitakyushu, JP, 20. - 24.05.1996, Verlag Elsevier Science, 1997, Seiten 1109 bis 1129).

Eine entsprechende Kühltechnik ist auch für den aus der eingangs genannten US-A-Schrift entnehmbaren supraleitenden Rotor einer elektrischen Maschine vorgesehen. Der Rotor enthält eine rotierende Wicklung aus HTS-Leitern, die mittels einer als Stirling- oder Gifford-McMahon- oder Pulsröhrenkühler ausgelegten Kälteeinheit auf einer gewünschten Betriebstemperatur zwischen 30 und 40 K zu halten ist. Die Kälteeinheit enthält hierzu in einer speziellen Ausführungsform einen mitrotierenden, nicht weiter ausgeführten Kaltkopf, dessen kältere Seite thermisch an die Wicklung indirekt über wärmeleitende Elemente gekoppelt ist. Ferner enthält die Kälteeinheit der bekannten Maschine eine außerhalb ihres Rotors befindliche Kompressoreinheit, die den Kaltkopf über eine rotierende, nicht näher ausgeführte Kupplung einer entsprechenden Transfereinheit das erforderliche Arbeitsgas zuführt. Die Kupplung versorgt außerdem über zwei Schleifringe auch einen Ventiltrieb der Kälteeinheit, der in den Kaltkopf integriert ist, mit der nötigen elektrischen Energie. Dieses Konzept macht es erforderlich, daß in der Transfereinheit mindestens zwei Gasverbindungen koaxial geführt und mindestens zwei elektrische Schleifringe vorgesehen werden müssen. Zudem ist die Zugänglichkeit der mitrotierenden Teile der Kälteeinheit und insbesondere des Ventiltriebs in dem Rotor der Maschine behindert: Denn bei erforderlichen Wartungen muß das Rotorgehäuse geöffnet werden. Desweiteren ist die Funktion eines herkömmlichen Ventiltriebs bei schneller Rotation, wie sie bei Synchronmotoren oder Generatoren gegeben ist, nicht gesichert.

Aufgabe der vorliegenden Erfindung ist es, ausgehend von diesem Stand der Technik die Einrichtung mit den eingangs genannten Merkmalen dahingehend auszugestalten, daß mit ihr ein sicherer Betrieb der Kälteeinheit auch bei den genannten Drehzahlen in einem Temperaturbereich unter 77 K bei vergleichsweise vermindertem apparativen Aufwand gewährleistet ist.

Diese Aufgabe wird erfindungsgemäß mit den im Anspruch 1 angegebenen Maßnahmen gelöst. Dementsprechend umfaßt die Supraleitungseinrichtung einen um eine Rotationsachse drehbar gelagerten Rotor, der eine Wicklung aus Supraleitermaterial aufweisenden Leitern enthält, und eine für ein Arbeitsgas ausgelegte Kälteeinheit, die mindestens einen regenerativen Kryokühler aufweist. Dieser Kryokühler besitzt wenigstens einen in dem Rotor angeordneten, thermisch an die Wicklung zu deren indirekter Kühlung gekoppelten Kaltkopf und eine außerhalb des. Rotors befindliche, ortsfeste Kompressoreinheit.

Ferner weist die Kälteeinheit eine zwischen dem Kaltkopf und der Kompressoreinheit angeordnete Transfereinheit mit Dichtungsmitteln und einer Gaskupplung zur Überleitung des Arbeitsgases zwischen ortsfesten und rotierenden Teilen auf, wobei für das Arbeitsgas eine unmittelbare Verbindung zwischen der Gaskupplung und dem Kaltkopf vorhanden ist.

Unter einer unmittelbaren Verbindung für das Arbeitsgas wird hierbei verstanden, daß nach dem Gastransfer von ortsfesten auf rotierende Teile der Transfereinheit (oder in umgekehrter Richtung) zwischen dieser und dem Kaltkopf keine weiteren, für eine Funktion der Kälteeinrichtung unabdingbar erforderlichen Teile wie insbesondere elektrische Steuerleitungen und gegebenenfalls ein Ventieltrieb vorgesehen werden müssen.

Bei der erfindungsgemäßen Ausgestaltung der Supraleitungseinrichtung ist folglich die Kompressorseite ( gegebenenfalls zusammen mit einem erforderlichen Ventiltrieb ) der Kälteeinheit feststehend außerhalb des Rotors anzuordnen, während die rotierende Kupplung zwischen der Komressorseite ( und dem eventuell vorhandenen Ventiltrieb ) mit den elektischen Anschlüssen einerseits und dem eigentlichen Kaltkopf andererseits liegt. Es wurde erkannt, daß eine derartige Möglichkeit dann gegeben ist, wenn für die Kälteeinheit ein regenerativer Kryokühler ausgewählt wird. Unter einem regenerativen Kryokühler wird dabei ein Kryokühler mit Regenerator bzw. regenerativem Arbeitszyklus entsprechend der üblichen Klassifikation der Kryokühler verstanden (vgl.z.B. "Proc. 16^{th} Int.
Cryog. Engng. Conf (ICEC 16)", Kitakyushu, JP, 20. - 24.05.1996, Verlag Elsevier Science, 1997, Seiten 33 bis 44). Die Anzahl an zu dem Kaltkopf einer solchen Kryokühlers führenden Gasverbindungsleitungen ist dann vorteilhaft minimal. Außerdem können Schleifringe zur Stromübertragung völlig entfallen. So ist z.B. für einen unter den gennannten Kryokühlertyp fallenden Pulsröhrenkühler nach dem Prinzip mit zweitem Einlaß nur eine einzige Gaszuführung zum Rotor nötig. Auf dem Rotor sind bei diesem Typ auch keinerlei mechanisch bewegte Teile montiert, so daß in der Regel auch keine Wartungsarbeiten am Rotor erforderlich werden. Der Ventiltrieb des Pulsröhrenkühlers kann an einer passenden Stelle außerhalb des Rotors montiert werden und ist für Wartungsarbeiten leicht zugänglich. Entsprechende Vorteile ergeben sich auch für die Ausführungsform eines Split-Stirling-Kühlers, der ohne Ventiltrieb auskommt. Vorzugsweise wird also als regenerativer Kryokühler ein Pulsröhrenkühler oder ein Split-Stirling-Kühler gewählt. Mit diesen Kühlertypen können nämlich nicht nur die genannten Forderungen bezgl. eines begrenzten apparativen Aufwandes ohne weiteres erfüllt werden; sie sind auch im Hinblick auf einen Einsatz für rotierende Wicklungen als hinreichend ausgereift anzusehen.

Vorteilhafte Ausgestaltungen der erfindungsgemäßen Supraleitungseinrichtung gehen aus den abhängigen Ansprüchen hervor.

So kann vorteilhaft die Kälteeinheit mehrere Kaltköpfe aufweisen. Es lassen sich dann je nach Wicklungsgröße höhere Kälteleistungen erbringen. Außerdem ist eine Anordnung dieser Kaltköpfe möglich, die eventuelle Unwuchtprobleme des Rotors reduziert.

Besonders vorteilhaft kann der Kaltkopf mehrstufig ausgebildet sein. Mit seiner ersten Stufe ist dann eine Stromzuführung oder ein thermischer Strahlungsschild auf eine vergleichsweise höhere Zwischentemperatur zu legen. Mit einem entsprechend ausgelegten Kaltkopf lassen sich auf einfache Weise verschiedene mitrotierende Teile jeweils auf einem für eine effektive Kühlung günstigen Temperaturniveau halten.

Außerdem ist es als vorteilhaft anzusehen, wenn die zu kühlende Wicklung und damit ihr Supraleitermaterial mittels des Kaltkopfes auf einer Temperatur unter 77 K, im Falle einer Verwendung von HTS-Material vorzugsweise zwischen 20 und 50 K, zu halten ist. Bekannte HTS-Materialien weisen nämlich in diesem mit verhältnismäßig begrenztem Kühlaufwand einzuhaltenden Temperaturbereich eine für übliche Anwendungen hinreichende kritische Stromdichte auf.

Weiterhin ist es von besonderem Vorteil, wenn eine vertikale Ausrichtung der Rotationsachse des Rotors vorgesehen wird. Bei einer entsprechenden Ausrichtung des Kaltkopfes ist dann auch bei hohen Drehzahlen des Rotors eine Funktionstüchtigkeit zu gewährleisten, ohne daß räumliche Probleme innerhalb des Rotorkörpers bezüglich einer Anordnung eines ausgedehnten Kaltkopfes gegeben sind.

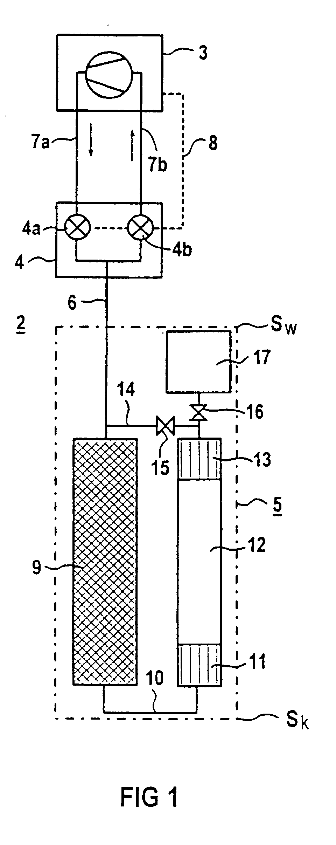

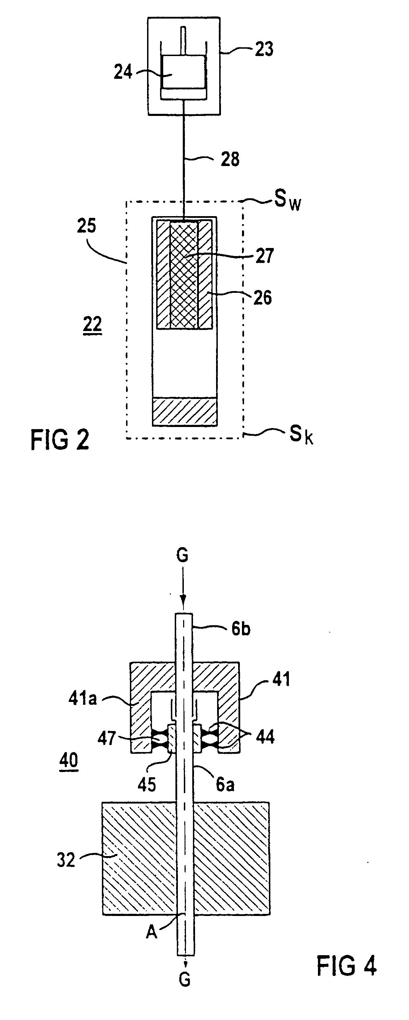

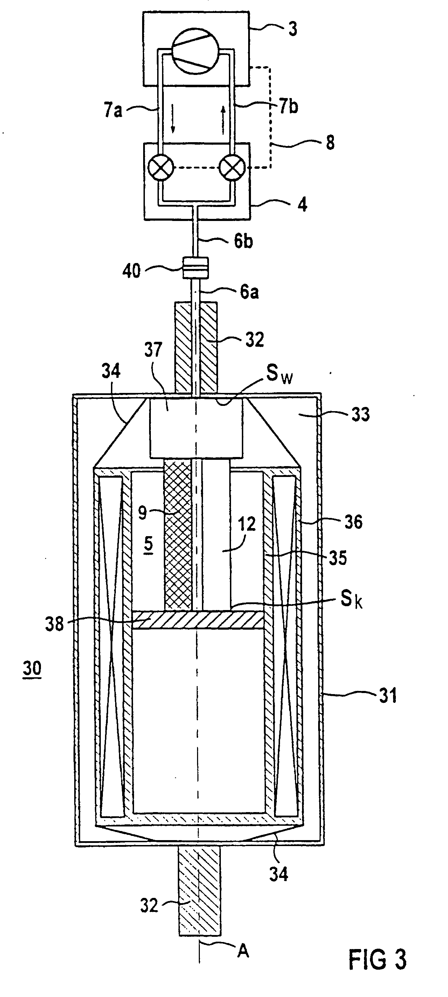

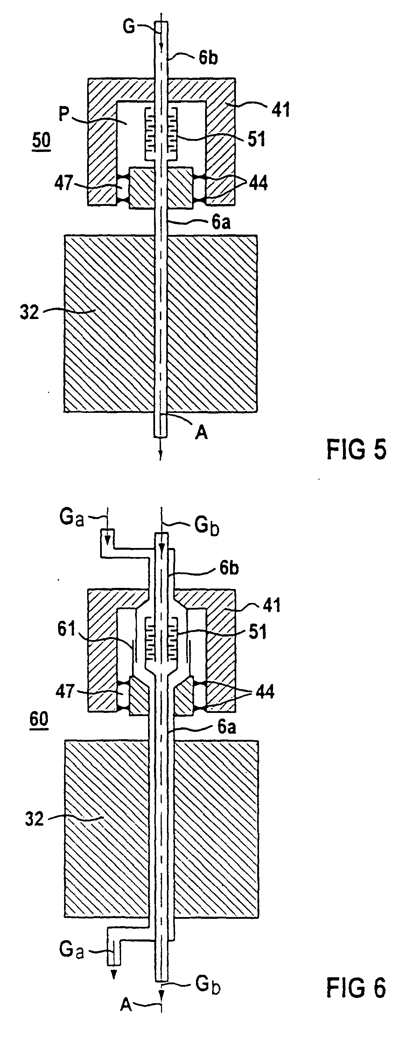

Die Erfindung wird nachfolgend anhand der Zeichnung noch weiter erläutert. Dabei zeigen jeweils schematisch
- deren Figur 1: einen bekannten Pulsröhrenkühler mit einem Kaltkopf,
- deren Figur 2: einen bekannten Split-Stirling-Kühler mit Kaltkopf,
- deren Figur 3: den Rotor einer erfindungsgemäßen Supraleitungseinrichtung mit zugehörender Kälteeinheit
- sowie deren Figuren 4 bis 6: verschiedene Ausführungsformen von Gaskupplungen, wie sie für erfindungsgemäße Einrichtungen geeignet sind.
In den Figuren sind sich entsprechende Teile mit denselben Bezugszeichen versehen.

Eine erfindungsgemäße Supraleitungseinrichtung umfaßt eine rotierende, supraleitende Wicklung, die prinzipiell eine Verwendung von LTS-Material oder HTS-Material gestattet. Letzteres Material sei für die nachfolgenden Ausführungsbeispiele ausgewählt. Eine zur Kühlung dieses Materials erforderliche Kältevorrichtung enthält als einen wesentlichen Teil einen regenerativer Kryokühler, der gemäß einer ersten Ausführungsform ein Pulsröhrenkühler ist. Bei einem solchen Pulsröhrenkühler wird von an sich bekannten Ausführungsformen ausgegangen (vgl. z.B. die vorgenannte Literaturstelle aus "Proc. ICEC 16", Seiten 33 bis 44). Der grundsätzliche Aufbau einer speziellen Ausführungsform eines solchen Pulsröhrenkühlers mit einem sogenannten zweiten Einlaß und angekoppeltem Reservoir (Puffer) geht z.B. aus "Cryogenics", Vol. 30, 1990, Seiten 514 bis 520 hervor und ist in Figur 1 angedeutet.

Der allgemein mit 2 bezeichnete, für ein Arbeitsgas wie insbesondere He-Gas ausgelegte Pulsröhrenkühler umfaßt im wesentlichen die folgenden Teile, nämlich eine Kompressoreinheit 3, eine auch als Ventiltrieb bezeichnete Ventileinheit 4 mit Ventilen 4a und 4b, einen vertikal ausgerichteten Kaltkopf 5 sowie Verbindungsleitungen 6, 7a und 7b zwischen diesen Teilen. Die Kompressoreinheit 3 liefert He-Hochdruckgas über eine Verbindungsleitung 7a an die Ventileinheit 4, von der über eine Verbindungsleitung 7b Niederdruckgas der Kompressoreinheit zurückgeführt wird. Die Ventile 4a und 4b in den Leitungen 7a bzw. 7b werden über elektrisch betriebene Motoren oder Magnetventile gesteuert; dabei ist die Ventieleinheit elektrisch mit der Kompressoreinheit verbunden. Ein entsprechendes Steuerkabel ist durch eine mit 8 bezeichnete gestrichelte Linie angedeutet. Die Ventileinrichtung 4 liefert über die Verbindungsleitung 6 einen periodisch, z.B. mit einer Frequenz zwischen 1 und 50 Hz, zwischen Hoch- und Niederdruck geschalteten Gasstrom des mit G bezeichneten Arbeitsgases an den Kaltkopf 5 an dessen warmer Seite S_{w}. Während der Hochdruckphase strömt das Gas durch ein vertikal ausgerichtetes Regeneratorrohr 9 von der warmen Seite zur kalten Seite Sₖ des Kaltkopfes. Das Regeneratorrohr ist mit wärmespeichernden, gasdurchlässigem Material z.B. in Form von gestapelten Metallsieben, Körnern, Sinterkörpern oder Lochblechen gefüllt. Beim Durchströmen des Regeneratorrohres wird das Arbeitsgas vorgekühlt. Anschließend passiert es eine an der kalten Seite Sₖ befindliche Überströmleitung 10, einen kalten Wärmetauscher 11, in dem Wärme auf dem niedrigen Temperaturniveau aufgenommen werden kann, und strömt dann durch ein parallel zu dem Regeneratorrohr 9 verlaufendes Pulsrohr 12. In diesem Pulsrohr tritt eine Entspannung des Gases ein, die mit einer weiteren Kühlung einhergeht. In dem Pulsrohr nach oben strömend erwärmt sich das Gas zunehmend und kann dann an einem warmen Wärmetauscher 13 Wärme nach außen abgeben. Ein kleinerer Teil des Gases strömt direkt durch einen zweiten Einlaß 14 mit einer Düse 15 in das Pulsrohr 12. Ferner ist der Wärmetauscher 13 über eine Düse 16 mit einem Puffervolumen 17 verbunden. Die gezeigten Düsen und das Puffervolumen dienen dabei zum Einstellen der Gasströme und zur Sicherstellung einer korrekten Funktion des Pulsröhrenkühlers. In einer sich an die vorstehend geschilderte Hochdruckphase anschließenden Niederdruckphase wird entspanntes Gas auf dem umgekehrten Weg wieder aus dem Kaltkopf abgezogen. Die kalte Seite Sₖ des Kaltkopfes 5 ist thermisch mit einer nicht dargestellten supraleitenden Wicklung verbunden.

Abweichend von der dargestellten Ausführungsform mit zwei Ventilen 4a und 4b sind auch 4-Ventil-Pulsröhrenkühler bekannt, bei der vier Ventile die korrekte Gasstromsteuerung übernehmen (vgl. US 5,335,505 A). Ferner können die Kaltköpfe auch zwei oder mehrstufig aufgebaut sein (vgl. z.B. "Cryogenics", Vol. 37, 1997, Seiten 159 bis 164).

Im Hinblick auf Verschleiß und Zuverlässigkeit eines Kaltkopfes ist für eine erfindungsgemäße Supraleitungseinrichtung eine Ausführungsform einer Kälteeinheit als besonders vorteilhaft anzusehen, deren Kryokühler als Pulsröhrenkühler gestaltet ist. Denn in ihrem Kaltkopf sind keine beweglichen Teile wie z.B. ein Verdrängerkolben vorhanden. Die erfindungsgemäßen Maßnahmen sind jedoch nicht auf diese Ausführungsformen der Kälteeinheit beschränkt. Vielmehr kommt für den Kryokühler insbesondere auch eine Ausführungsform als Split-Stirling-Kühler in Frage, der mit einem gasgesteuerten Verdrängerkolben arbeitet, also keinen mechanischen Antrieb des Kolben aufweist. Eine bekannte Ausführungsform eines solchen Kühlers (vgl. z.B. das Buch "Stirling-Maschinen-Technik", Hrsg.: F.Steimle, C.F.Müller Verlag, Heidelberg, 1996, Seiten 339 bis 357, insbesondere Seiten 347 bis 349) ist in Figur 2 angedeutet und mit 22 bezeichnet. Der Kühler enthält eine Kompressoreinheit 23 mit einem Arbeitskolben 24 sowie einen Kaltkopf 25. Der Kaltkopf weist einen beweglichen, gasgesteuerten Verdrängerkolben 26 mit einem Regenerator 27 auf. Die Kompressoreinheit 23 des Kühlers erzeugt eine Druckwelle mit einer vorbestimmten Arbeitsfrequenz, ohne daß ein zusätzlicher Ventiltrieb benötigt wird. Bei diesem Kühlertyp ist außer einer Verbindungsleitung 28, der sogenannten Split-Leitung, keine mechanische Verbindung zwischen der Kompressoreinheit und dem Kaltkopf erforderlich. Diese Verbindungsleitung führt zur warmen Seite S_{w} des Kaltkopfes. Die kalte Seite Sₖ des Kaltkopfes ist thermisch mit den zu kühlenden Teilen einer supraleitenden Wicklung verbunden.

Figur 3 zeigt als erfindungsgemäße Supraleitungseinrichtung den Rotor einer Synchronmaschine mit erforderlicher Kälteeinheit. Die Kälteeinheit ist dabei als Pulsröhrenkühler gemäß Figur 1 gestaltet. Der mit 30 bezeichnete Rotor umfaßt ein rotierendes Vakuumgefäß 31 an einer um eine Rotationsachse A drehbaren Welle 32. Innerhalb des Vakuumgefäßes ist in mindestens einem Vakuumraum 33 an Halterungselementen 34 ein vorzugsweise aus gut wärmeleitendem Material erstellter Wicklungsträger 35 zur Aufnahme einer supraleitenden Wicklung 36 befestigt. Die Wicklung soll Leiter aus einem der bekannten HTS-Materialien wie z.B. YBa₂Cu₃O₇₋ₓ, Bi₂Sr₂CaCu₂O₆₋ₓ oder (Bi, Pb)₂Sr₂Ca₂Cu₃O₁₀₊ₓ aufgebaut sein. Die Leiter sind insbesondere auf einem Temperaturniveau unter 77 K, vorzugsweise zwischen 20 und 50 K, beispielsweise zwischen 30 und 40 K mittels der Kälteeinheit zu halten. Hierzu enthält die Kälteeinheit zur indirekten Kühlung der Wicklung 36 den Pulsröhrenkühler mit einem Kaltkopf 5 nach Figur 1. Von diesem Kaltkopf sind lediglich sein Regeneratorrohr 9 und sein Pulsrohr 12 näher ausgeführt. Alle übrigen, an dessen warmer Seite S_{w} befindlichen Teile mit Düsen 15 und 16 und einem Puffervolumen 17 (vgl. Figur 1) sind nicht näher ausgeführt und als warmseitiger Kopfteil 37 bezeichnet. Die kalte Seite Sₖ des Kaltkopfes 5 ist über mindestens einen Wärmekontaktkörper 38, einen sogenannten Wärmebus, mit dem wärmeleitenden Spulenträger 35 und damit mit der Wicklung 36 thermisch verbunden. Von dem warmseitigen Kopfteil 37 führt zentral durch die Welle 32 eine Gasverbindungsleitung 6a bis zu einer Kupplung 40 einer nicht näher dargestellten Transfereinheit. An dieser Kupplung wird ein Arbeitsgas G wie insbesondere He-Gas zwischen rotierenden und ortsfesten Teilen überführt. Von der Kupplung führt eine ortsfeste Gasverbindungsleitung 6b zu der Ventileinheit 4 und der Kompressoreinheit 3 (vgl. Figur 1) des Kühlers.

Für eine Funktionsfähigkeit des Pulsröhrenkühlers ist es besonders vorteilhaft, wenn zumindest sein Pulsrohr 12 nicht in einer horizontalen Ebene liegt. Deshalb kann vorzugsweise der Rotor 30 so angeordnet sein, daß seine Achse A vertikal verläuft. In seinem Innenraum läßt sich dann ohne Schwierigkeit der Kaltkpf mit entsprechend ausgerichtem Pulsrohr und Regeneratorrohr unterbringen.

Kältemitteltransfereinheiten zur Überführung eines gasförmigen oder flüssigen Kältemittels sind von Rotoren mit Wicklungen unter Verwendung von klassischem (metallischem) Supraleitermaterial ( LTS-Material ) an sich bekannt (vgl. z.B. "Advances in Cryogenic Engineering", Vol. 23, 1978, Seiten 125 bis 139). Diese Transfereinheiten enthalten Kupplungen zwischen feststehenden und rotierenden Teilen, die z.B. als Dichtungsmittel Ferrofluiddichtungen aufweisen (vgl.
DE 20 34 213 A). Eine entsprechende Ausführungsform einer solchen Ferrofluiddichtung in einer für die erfindungsgemäße Supraleitungseinrichtung geeigneten Gaskupplung zeigt im Längsschnitt Figur 4. Die mit 40 bezeichnete Kupplung zwischen einer rotierenden, zu einem Kaltkopf führenden Gasleitung 6a am Ende einer Rotorwelle 32 und einer feststehenden, zu einem Ventiltrieb führenden Gasleitung 6b enthält ein feststehendes, die Gasleitung 6b umschließendes, topfartiges Dichtungsgehäuse 41. Dieses Gehäuse umgibt mit seinem rohrförmigen Seitenteil 41a ein Stückweit die rotierende Gasleitung 6b unter Ausbildung eines Ringspaltes 42. Zur hermetischen Abdichtung dieses Ringspaltes sind in diesem Lamellen 44 aus einem Ferrofluid magnetisch gehalten. Hierzu sind die entsprechenden Teile des rohrförmigen Seitenteils 41a des Dichtungsgehäuses 41 und/oder die gegenüberliegenden Teile 45 an oder um die rotierende Verbindungsleitung 6a permanentmagnetisch ausgeführt. Die Ferrofluidlamellen 44 im Ringspalt 42 bauen die Druckdifferenz zwischen dem pulsierenden Arbeitsgas des Pulsröhrenkühlers (in der Regel Heliumgas bei 10 bis 20 bar) und der Umgebungsluft ab. Je nach Auslegung kann auch eine größere Anzahl von Lamellen vorgesehen werden. In der Figur ist ferner ein über die Kupplung 40 vom Ventiltrieb zum Kaltkopf geführter Gasstrom G durch gepfeilte Linien veranschaulicht. Die Ferrofluiddichtung ist allgemein mit 47 bezeichnet.

Für die in den Figuren 5 und 6 gezeigten Gaskupplungen ist eine Figur 4 entsprechende Darstellung gewählt.

Figur 5 zeigt eine besonders vorteilhafte Weiterbildung der in Figur 4 gezeigten Kupplung 40. Bei dieser in Figur 5 mit 50 bezeichneten Kupplung ist nämlich der Ferrofluiddichtung 47 mit ihren Ferrofluidlamellen 44 noch eine Labyrinthdichtung 51 vorangeordnet (in Richtung vom Ventiltrieb zum Kaltkopf gesehen). Mit dieser Labyrinthdichtung 51 wird verhindert, daß die Ferrofluidlamellen mit dem Maximum des Druckes in der Hochdruckphase des Zyklus des Pulsröhrenkühlers belastet werden. Die Labyrinthdichtung baut Druckspitzen so ab, daß nur ein mittlerer Druck p des Arbeitsgases auf die Lamellen wirkt.

Selbstverständlich kann eine Kupplung einer erfindungsgemäßen Supraleitungseinrichtung auch so gestaltet sein, daß ein Kaltkopf mit zwei im allgemeinen konzentrischen Gasleitungen verbunden wird. So sind beispielsweise bei einem Pulsröhrenkühler nach dem Vierventilprinzip nach dessen Ventiltrieb noch zwei Gasströme an den Kaltkopf zu übertragen, jedoch keine elektrischen Signale. Eine hierfür geeignete Ausführungsform einer Gaskupplung 60 ist in Figur 6 angedeutet. Dabei wird ein äußerer Gasstrom Gₐ mit einer Ferrofluiddichtung 47 gegen die Atmosphäre abgedichtet. Der Ferrofluiddichtung kann zum Abfangen von Druckspitzen des Arbeitsgases eine Spalt- oder Labyrinthdichtung vorgeschaltet werden. Die Figur zeigt eine entsprechende Spaltdichtung 61. Für die Abdichtung der beiden Gasströme untereinander ist ebenfalls eine Spaltdichtung oder eine Labyrinthdichtung möglich. Bei der gezeigten Ausführungsform ist eine Labyrinthdichtung 51 vorgesehen.

Bei den in den Figuren 3 bis 6 gezeigten Ausführungsformen eines Rotors mit zugehörender Kälteeinrichtung bzw. von Gaskupplungen wurden jeweils Pulsröhrenkühler als Kälteeinheit zugrundegelegt. Selbstverständlich sind die erfindungsgemäßen Maßnahmen auch für Kälteeinheiten geeignet, die andere regenerative Kryokühler wie insbesondere einen Split-Stirling-Kühler aufweisen. Bei diesen Kühlern liegt dann die Gaskupplung in der von einer Kompressoreinheit zur warmen Seite eines Kaltkopfes führenden Gasverbindungsleitung (Split-Leitung 25 gemäß Figur 2).

Bei den vorstehend ausgewählten Ausführungsformen von erfindungsgemäßen Supraleitungseinrichtungen wurde davon ausgegangen, daß deren supraleitende Wicklung mit HTS-Leitern aufgebaut ist. Eine Beschränkung auf solche Materialien ist jedoch nicht erforderlich. Da nämlich insbesondere mit mehrstufigen regenerativen Kryokühlern auch Temperaturbereiche von unter 20 K zu erreichen sind, können diese ebenso auch zur Kühlung von LTS-Leitern wie z.B. NbTi-Leitern konzipiert werden. Die supraleitende Wicklung kann also auch Leiter mit metallischem Supraleitermaterial aufweisen.

## Patentansprüche

1. Supraleitungseinrichtung
- mit einem um eine Rotationsachse (A) drehbar gelagerten Rotor (30), der eine Wicklung (36) aus Supraleitermaterial aufweisenden Leitern enthält,
und
- mit einer für ein Arbeitsgas (G, Gₐ, G_{b}) ausgelegten Kälteeinheit, die
a) mindestens einen regenerativen Kryokühler mit
α) wenigstens einem in dem Rotor (30) angeordneten, thermisch an die Wicklung (36) zu deren indirekter Kühlung gekoppelten Kaltkopf (5, 25)
und
β) einer außerhalb des Rotors (30) befindlichen, ortsfesten Kompressoreinheit (3, 23)
sowie
b) eine zwischen dem Kaltkopf (5, 25) und der Kompressoreinheit (3, 23) angeordnete Transfereinheit mit Dichtungsmitteln und einer Gaskupplung (40, 50, 60) zur Überleitung des Arbeitsgases (G, Gₐ, G_{b}) zwischen ortsfesten und rotierenden Teilen
aufweist, wobei für das Arbeitsgas (G, Gₐ, G_{b}) eine unmittelbare Verbindung zwischen der Gaskupplung (40, 50, 60) und dem Kaltkopf (5, 25) vorhanden ist.

2. Einrichtung nach Anspruch 1, **dadurch gekennzeichnet, daß** der Kryokühler ein Pulsröhrenkühler (2) oder ein Split-Stirling-Kühler (22) ist.

3. Einrichtung nach Anspruch 1 oder 2, **dadurch gekennzeichnet, daß** die Transfereinheit eine Gaskupplung (40, 50, 60) enthält, deren Dichtungsmittel zumindest eine Dichtung aus der Gruppe Ferrofluiddichtung (47), Labyrinthdichtung (51), Spaltdichtung (61) aufweist.

4. Einrichtung nach einem der vorangehenden Ansprüche, **gekennzeichnet durch** eine Kälteeinheit mit mehreren Kaltköpfen.

5. Einrichtung nach einem der vorangehenden Ansprüche, **gekennzeichnet durch** eine mehrstufige Ausbildung des Kaltkopfes.

6. Einrichtung nach Anspruch 5, **dadurch gekennzeichnet, daß** der Kaltkopf zwei Kältestufen aufweist, wobei die erste Stufe mit einer Stromzuführung oder einem Strahlungsschild und die zweite Stufe mit der supraleitenden Wicklung (36) thermisch verbunden sind.

7. Einrichtung nach einem der vorangehenden Ansprüche, **dadurch gekennzeichnet, daß** die supraleitende Wicklung (36) mittels des Kaltkopfes (5, 25) auf einer Temperatur unter 77 K zu halten ist.

8. Einrichtung nach einem der vorangehenden Ansprüche, **dadurch gekennzeichnet, daß** die kalte Seite (Sₖ) des Kaltkopfes (5, 25) mit einem Wärmekontaktkörper (38) thermisch verbunden ist, über den die indirekte Kühlung der supraleitenden Wicklung (36) erfolgt.

9. Einrichtung nach einem der vorangehenden Ansprüche, **dadurch gekennzeichnet, daß** die supraleitende Wicklung (36) in einem thermisch gut leitenden Wicklungsträger (35) angeordnet ist.

10. Einrichtung nach einem der vorangehenden Ansprüche, **gekennzeichnet durch** eine vertikale Ausrichtung der Rotationsachse (A) des Rotors (30).

11. Einrichtung nach einem der vorangehenden Ansprüche, **dadurch gekennzeichnet, daß** die Leiter der Wicklung (36) metallisches Niedrig-T_{c}-Supraleitermaterial oder metalloxidisches Hoch-T_{c}-Supraleitermaterial enthalten.

## Claims

1. Superconducting device
- having a rotor (30) which is mounted so as to rotate about a rotation axis (A) and contains a winding (36) of conductors comprising superconductor material,
and
- having a refrigeration unit which is designed for a working gas (G, Gₐ, G_{b}) and has
a) at least one regenerative cryocooler having
α) at least one cold head (5, 25), which is arranged in the rotor (30) and is thermally coupled to the winding (36) for indirect cooling of the latter,
and
β) a stationary compressor unit (3, 23) located outside the rotor (30),
as well as
b) a transfer unit, arranged between the cold head (5, 25) and the compressor unit (3, 23), having sealing means and a gas coupling (40, 50, 60) for conveying the working gas (G, Gₐ, G_{b}) between the stationary and rotating parts,
a direct connection for the working gas (G, Gₐ, G_{b}) being provided between the gas coupling (40, 50, 60) and the cold head (5, 25).

2. Device according to Claim 1, **characterized in that** the cryocooler is a pulse tube cooler (2) or a split Stirling cooler (22).

3. Device according to Claim 1 or 2, **characterized in that** the transfer unit contains a gas coupling (40, 50, 60) whose sealing means have at least one seal from the group: ferrofluid seal (47), labyrinth seal (51), clearance seal (61).

4. Device according to one of the preceding claims, **characterized by** a refrigeration unit having a plurality of cold heads.

5. Device according to one of the preceding claims, **characterized by** a multistage design of the cold head.

6. Device according to Claim 5, **characterized in that** the cold head has two refrigeration stages, the first stage being thermally connected to an electrical feed or a radiation shield, and the second stage being thermally connected to the superconducting winding (36).

7. Device according to one of the preceding claims, **characterized in that** the superconducting winding (36) is to be kept at a temperature below 77 K by means of the cold head (5, 25).

8. Device according to one of the preceding claims, **characterized in that** the cold side (Sₖ) of the cold head (5, 25) is thermally connected to a heat-contact body (38), via which the indirect cooling of the superconducting winding (36) is carried out.

9. Device according to one of the preceding claims, **characterized in that** the superconducting winding (36) is arranged in a winding support (35) having a high thermal conductivity.

10. Device according to one of the preceding claims, **characterized by** a vertical orientation of the rotation axis (A) of the rotor (30).

11. Device according to one of the preceding claims, **characterized in that** the conductors of the winding (36) contain metallic low-T_{c} superconductor material or metal oxide high-T_{c} superconductor material.

## Revendications

1. Dispositif supraconducteur
- comprenant un rotor (30) monté tournant par rapport à un axe (A) de révolution et comportant un enroulement (36) constitué de conducteurs ayant du matériau supraconducteur,
et
- comprenant une unité de refroidissement conçue pour un gaz (G, Gₐ, G_{b}) de travail, qui a
a) au moins un dispositif de cryorefroidissement régénératif ayant
α) au moins une tête (5, 25) froide placée dans le rotor (30) et couplée thermiquement à l'enroulement (36) pour le refroidissement indirect de celui-ci.
et
β) un groupe (3, 23) compresseur à poste fixe et se trouvant à l'extérieur du rotor (30)
ainsi que
b) une unité de transfert disposée entre la tête (5, 25) froide et le groupe (3, 23) compresseur et ayant des moyens d'étanchéité et un couplage (40, 50, 60) pour du gaz pour le passage du gaz (G, Gₐ, G_{b}) de travail entre des parties à poste fixe et des parties tournantes une communication directe pour le gaz (G, Gₐ, G_{b}) de travail étant présente entre le couplage (40, 50, 60) pour du gaz et la tête (5, 25) froide.

2. Dispositif suivant la revendication 1, **caractérisé en ce que** le dispositif de cryorefroidissement est un dispositif (2) de refroidissement tubulaire pulsé ou un dispositif (22) de refroidissement Split-Stirling.

3. Dispositif suivant la revendication 1 ou 2, **caractérisé en ce que** l'unité de transfert comporte un couplage (40, 50, 60) pour du gaz dont les moyens d'étanchéité ont au moins une étanchéité choisie dans le groupe d'une étanchéité (47) à ferrofluide, d'une étanchéité (51) à labyrinthe et d'une boîte (61) à labyrinthe.

4. Dispositif suivant l'une des revendications précédentes, **caractérisé par** une unité de refroidissement ayant plusieurs têtes froides.

5. Dispositif suivant l'une des revendications précédentes, **caractérisé par** une constitution en plusieurs étages de la tête froide.

6. Dispositif suivant la revendication 5, **caractérisé en ce que** la tête froide a deux étages de refroidissement, le premier étage étant relié thermiquement à une entrée de courant ou à un bouclier vis-à-vis du rayonnement et le deuxième étage à l'enroulement (36) supraconducteur.

7. Dispositif suivant l'une des revendications précédentes, **caractérisé en ce que** l'enroulement (36) supraconducteur peut être maintenu à une température inférieure à 77 K au moyen de la tête (5, 25) froide.

8. Dispositif suivant l'une des revendications précédentes, **caractérisé en ce que** le côté (Sₖ) froid de la tête (5, 25) froide est relié thermiquement à un corps (38) de contact calorifique par lequel s'effectue le refroidissement indirect de l'enroulement (36) supraconducteur.

9. Dispositif suivant l'une des revendications précédentes, **caractérisé en ce que** l'enroulement (36) supraconducteur est placé dans un support (35) d'enroulement bon conducteur thermique.

10. Dispositif suivant l'une des revendications précédentes, **caractérisé par** une orientation verticale de l'axe (A) de révolution du rotor (30).

11. Dispositif suivant l'une des revendications précédentes, **caractérisé en ce que** les conducteurs de l'enroulement (36) sont en matériau métallique supraconducteur à T_{c} basse ou en matériau supraconducteur à base d'oxyde métallique à T_{c} haute.
